Europäisches Patentamt

European Patent Office

Office européen des brevets

(11) Publication number: **0 030 808**
**B1**

(12) **EUROPEAN PATENT SPECIFICATION**

(45) Date of publication of patent specification: **20.03.85**

(21) Application number: **80304310.8**

(22) Date of filing: **01.12.80**

(51) Int. Cl.⁴: **A 01 D 85/00**

(54) **Bale accumulating devices.**

(30) Priority: **05.12.79 GB 7941910**

(43) Date of publication of application:
**24.06.81 Bulletin 81/25**

(45) Publication of the grant of the patent:
**20.03.85 Bulletin 85/12**

(84) Designated Contracting States:
**BE DE FR GB IT NL SE**

(56) References cited:
**FR-A-2 380 719**
**GB-A-1 393 458**
**US-A-2 822 659**
**US-A-3 779 402**

(73) Proprietor: **TANCO ENGINEERING COMPANY LIMITED**
**Royal Oak Road**
**Bagenalstown County Carlow (IE)**

(72) Inventor: **Dodgson, John Richard**
**"Cragg" Burnside**
**Kendal Cumbria (GB)**

(74) Representative: **Neill, Alastair William**
**Appleyard Lees & Co. 15 Clare Road**
**Halifax West Yorkshire HX1 2HY (GB)**

Courier Press, Leamington Spa, England.

## Description

The invention relates to bale accumulating devices.

Bale accumulating devices are known which comprise a device for attachment to the rear of a baling machine which device accumulates bales as the bales are fed out of the rear of the baling machine, arranges the bales according to a predetermined pattern and when a predetermined number of bales have accumulated in the predetermined pattern the bales are released by the device, for example so that they can later be loaded on to a transporting vehicle such as a trailer by a bale handling device.

Some of the known devices, for example that described in G.B. Patent 1393458, accumulate the bales on the ground, within an enclosure which causes the bales to be dragged along the ground while the predetermined number is being accumulated within the enclosure. This dragging of the bales over the ground is undesirable since it can damage the bales or cause them to be covered in mud during wet conditions, but it is difficult to avoid this problem in the known devices, since frictional forces which the ground exerts upon the bales are used to position at least some of the bales in the predetermined pattern, the pattern usually comprising two parallel rows of bales, each row containing four bales, and the longitudinal axis of each bale being perpendicular to the axis of the rows.

Other devices accumulate the bales on a floor which moves along behind the baling machine but complicated ram devices are required to move the bales over the floor to position them in the predetermined pattern and means must be provided to push the accumulated bales off the floor when the predetermined number has been accumulated.

The invention seeks to avoid the problems associated with the dragging of bales over the ground, and to provide a simple and effective means for positioning bales within an accumulating device.

The invention provides a bale accumulating device comprising a wheeled vehicle arranged for towing behind a baling machine to accumulate bales as the bales are fed out of the rear of the baling machine, arrange the bales according to a predetermined pattern and release the bales when a predetermined number of bales have accumulated in the predetermined pattern, the vehicle having two compartments arranged side by side and extending parallel to the fore and aft axis of the vehicle, and sorting means operable to receive the bales and turn them through 90° and feed them to the compartments, characterised in that there are support means at the bottom of each compartment arranged to support within the respective compartment a row of bales arranged adjacent to one another with the row extending parallel to the fore and aft axis of the vehicle, and the longitudinal axis of each bale extending perpendicular to the fore and aft axis of the vehicle, the sorting means comprising a frame positioned between the two compartments and which, when a bale has issued from the baling machine, engages with the bale and swings to one side such that the bale moves through an arc of 90° and is urged into one of the compartments, the frame then being in a position such that after the next bale has issued from the baling machine, swinging back of the frame in the opposite direction will turn the next bale and urge it into the other of the compartments.

Preferably the accumulating device is such that when each compartment has accumulated a predetermined number of bales, the support means at the base of each compartment allows the accumulated bales to drop through the bottom of the compartment on to the ground.

The movement of the frame may be controlled by a switch device operated by the engagement of a bale with the frame.

The frame may be provided with guide members to assist in positioning the bales correctly and the guide members may be movable relative to the frame as the frame swings.

The movement of the guide members may be controlled by the swinging movement of the frame, for example via cam means.

The accumulating device may be such that after a first bale has been urged into a compartment, the bale is successively moved along the compartment from the front end to the rear end by the pressure exerted by succeeding bales as they are urged into the same compartment.

The support means of each compartment may comprise a pair of support flaps positioned one at each side of the associated compartment such that the two ends of each bale are supported one on each support flap.

The support flaps may be hinged to the sides of the associated compartment so that the support flaps can release the bales by swinging downwardly from a horizontal position into a vertical position.

The movement of the flaps into the vertical position may be controlled by a control device arranged at the rear end of the compartments, which control device is operated by a bale when the compartments are full.

The control device may comprise a control flap which is arranged at the end of the compartment which will receive the last bale of a predetermined accumulated pattern of bales.

Each compartment may be arranged to receive four bales.

The control flap may be connected by a linkage to a release mechanism for the support flaps.

By way of example, specific embodiments of bale accumulating device according to the invention will now be described, with reference to the accompanying drawings, in which:—

Figure 1 is a perspective view of a first embodiment of bale accumulating device according to the invention;

Figure 2 is a plan view of the device of Figure 1;

Figure 3 is a side view of the device of Figure 1;

Figure 4 is a cross-sectional side view of the rear end of the device of Figure 1;

Figure 5 is a diagrammatic rear view of part of the device of Figure 1;

Figure 6 is a view similar to that of Figure 5 but showing an alternative embodiment of device; and

Figure 7 is a plan view of the front end of yet another embodiment of device according to the invention.

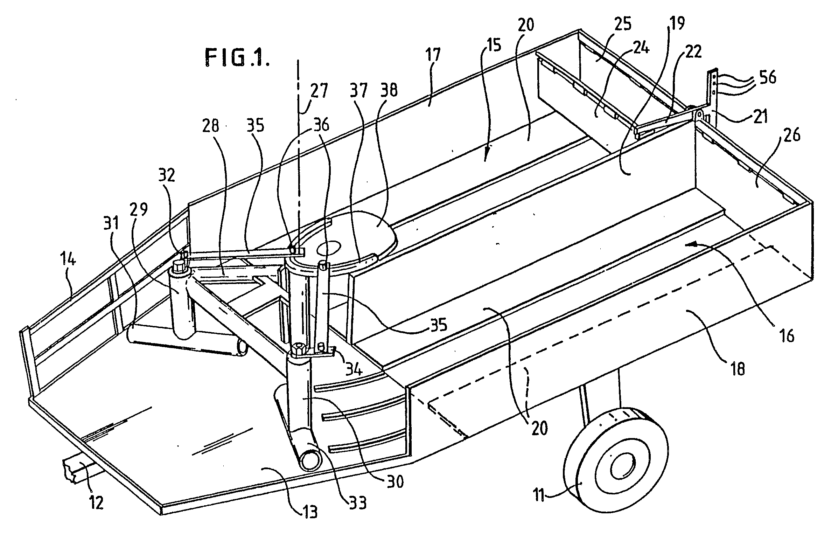

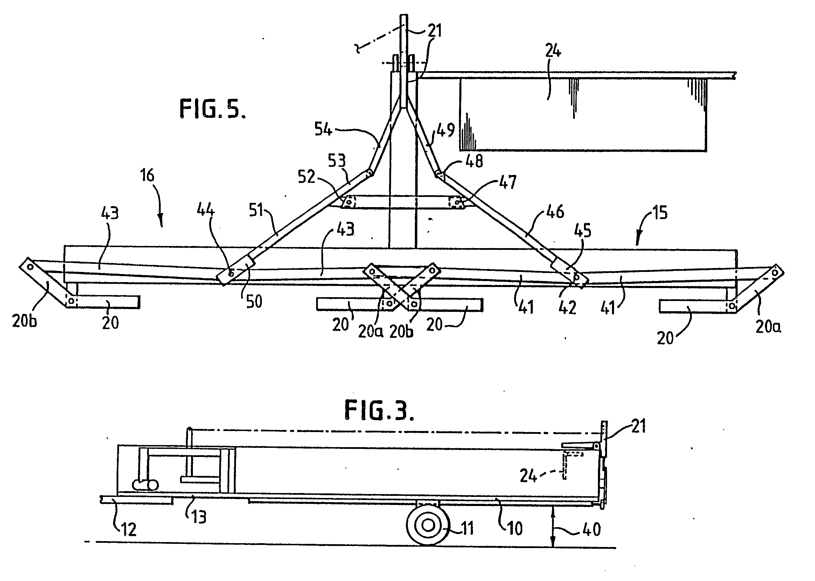

The device shown in Figures 1 to 5 comprises a vehicle having a chassis 10 (Figure 3) supported on a pair of wheels 11 and arranged to be towed behind a baling machine by means of a drawbar 12.

The front of the trailer has a trapezium-shaped fixed floor 13 with a guide rail at each side thereof. Only one guide rail 14 is shown in Figure 1, the other having been omitted for the sake of clarity.

Behind the floor 13 the vehicle is divided into two parallel adjacent compartments 15 and 16, the longitudinal axes of the compartments extending parallel to the fore and aft axis of the vehicle. Compartment 15 has an outer side wall 17, compartment 16 has an outer side wall 18, and there is a common inner side wall 19. Each compartment has a partial floor in the form of a pair of flaps 20, one at each side of the compartment. The flaps are hinged for movement between the horizontal position shown and a downwardly extending vertical position in which the compartments have a completely open floor. Thus one flap 20 is hinged to side wall 17, one flap 20 is hinged to side wall 18, and two flaps 20 are hinged to the inner wall 19.

The flaps 20 are normally held in the horizontal position shown by the arrangement shown in Figure 5.

Each flap 20 has a lug 2 attached to the rear end thereof, the lugs of the flaps for compartment 15 being marked 20a in Figure 5 whilst the flaps for compartment 16 are marked 20b.

A pair of links 41, hinged together by a pivot pin 42, interconnect lugs 20b and a pair of links 43, hinged together by a pivot pin 44, interconnect lugs 20a. The pivot pin 42 engages in a slotted member 45 arranged at one end of a lever 46. The lever 46 is pivotally mounted at 47 and its upper end 48 is connected by a link 49 to a pivotally mounted L-shaped lever 21. The L-shaped lever 21 is rigidly attached to a forwardly projecting arm 22. Below the front end of the arm 22 there is a cam 23 (Figure 4) connected to a vertically extending hinged flap 24, arranged near to the end of the compartment 15. The compartment 16 has a similar end 26 but is not provided with a flap such as flap 24.

The pivot pin 44 engages in a slotted member 50 arranged at one end of a lever 51. The lever 51 is pivotally mounted at 52 and its upper end 53 is connected by a link 54 to the lever 21.

The arrangement is such that in the position shown in Figure 5, the pivot pins 42 and 44 are slightly below the pivot points between the respective links 41, 43 and their associated lugs 20a, 20b. Thus the pivot pins 42 and 44 are in an over-centre position and any attempt by the flaps 20 to drop downwardly out of their horizontal positions merely causes the links 41 and 43 to jack-knife downwardly. This is prevented by engagement of the links 41 and 42 with stop members (not shown) at the rear of the device.

If the flap 24 is swung rearwardly however the cam 23 pushes the arm 22 upwardly, pivoting the L-shaped lever 21 clockwise as viewed in Figure 4. This in turn pushes the links 49 and 54 downwardly, causing the levers 46 and 51 to pivot to raise the pivot pins 42 and 44. These pins pass over-centre upwardly allowing the links 41 and 43 to jack-knife upwardly, the flaps 20 dropping into a vertical position.

Mounted on the floor 13, for pivotal movement about an axis 27 which lies between the compartments 15 and 16, there is a triangular-shaped frame 28. One apex of the triangle is at the pivotal axis 27. At each of the other apices of the triangle there is a vertical guide tube 29, 30. At the foot of the guide tube 29 there is a transversely extending guide bar 31 which is mounted for pivotal movement on a shaft extending up the guide tube 29 and rotatable with a lug 32. Similarly the lower end of the guide tube 30 is provided with a guide rod 33 which is rotatable with a lug 34. The lugs 32 and 34 are connected by links 35 to cam followers 36 running in a cam track 37 provided in a cam 38 mounted between the compartments 15 and 16.

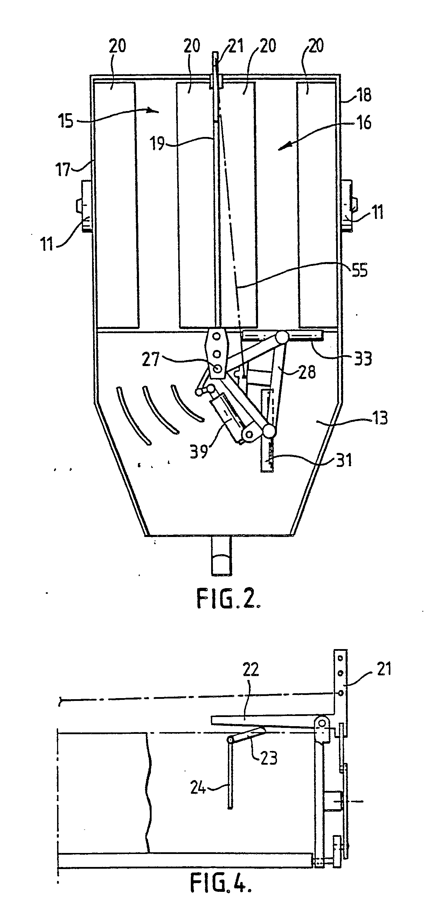

The frame 28 can be pivoted about its axis 27 by means of a double-acting ram which is not shown in Figure 1 for the sake of clarity but is shown in Figure 2 at 39.

The frame 28 can be used to supply bales alternately to the compartments 15 and 16. When the frame is in the position shown in Figure 2 for example, the guide bar 31 lies parallel to, and to one side of, the path which a bale will take when being fed to the accumulating device by a baling machine, with the longitudinal axis of the bale coincident with the longitudinal axis of the bale accumulating device. When the leading end of the bale strikes the axis 27 about which the frame 28 pivots, a switch is depressed by the bale which actuates the ram 39 and causes the frame 28 to pivot in a clockwise direction as viewed in Figure 2. This causes the frame 28 to swing around until the frame ends up in a position which is the mirror image of the position shown in Figure 2. The action of the cam 38 on the cam follower 36 causes the lug 32 and hence the guide bar 31 to pivot with respect to the frame 28 so that the guide bar 31 maintains the correct orientation to sweep the bale neatly round in a 90° arc, so that the longitudinal axis of the bale is transverse to the longitudinal axis of the compartment 15, and push the bale into the forward end of the compartment 15. The guide bar 31 will thus be in a similar position to that occupied by guide bar 33 in Figure 2.

When the frame 28 reaches this mirror image position, a further switch is actuated cutting off power to the ram 39. When the next bale is emitted by the baling machine, it again strikes the switch positioned at the axis 27 and this causes the ram 39 to swing the frame back in the reverse direction until the position shown in Figure 2 is again reached. Thus the next bale is swung through 90° and is pushed into compartment 16.

It will be seen that as long as bales are issued by the baling machine, the frame 28 automatically distributes these bales alternately between the two compartments 15 and 16.

In practice the first bale is fed into compartment 16, the second bale into compartment 15, and so on. Thus the seventh bale completes the accumulation of a set of four bales in compartment 16. As each succeeding bale is pushed into the compartment it moves any preceding bales along the compartment towards the rear of the compartment.

When the eighth bale is pushed into compartment 15, the bale at the rear end of that compartment pushes the flap 24 rearwardly thus causing the leg 21 to free the flaps 20. These drop downwardly and a neat pattern of eight accumulated bales is dropped on to the ground between the wheels 11 of the vehicle. The ground clearance 40 as shown in Figure 3 is sufficient to allow room for the block of eight bales to lie on the ground without being fouled by the underside of the vehicle as the vehicle moves away.

A cable 55 (shown in Figure 2 but omitted from Figure 1 for the sake of clarity) is attached between one of the holes 56 (Figure 1) of lever 21 and the frame 28. The point of attachment on the frame is such that whenever the arm 22 is in its raised position (as happens each time a pattern of bales has been dropped on to the ground) and the upper end of lever 21 is hence tilted backwardly, a pull is exerted on the cable drawing the lever 21 and arm 22 back into the positions shown in the Figures. This in turn pulls the links 49 and 54 upwardly, swinging the levers 46 and 51 so as to return the pivot pins 42 and 44 to their lower over-centre position. The flaps 20 are thus returned to the horizontal position ready to receive a new set of bales.

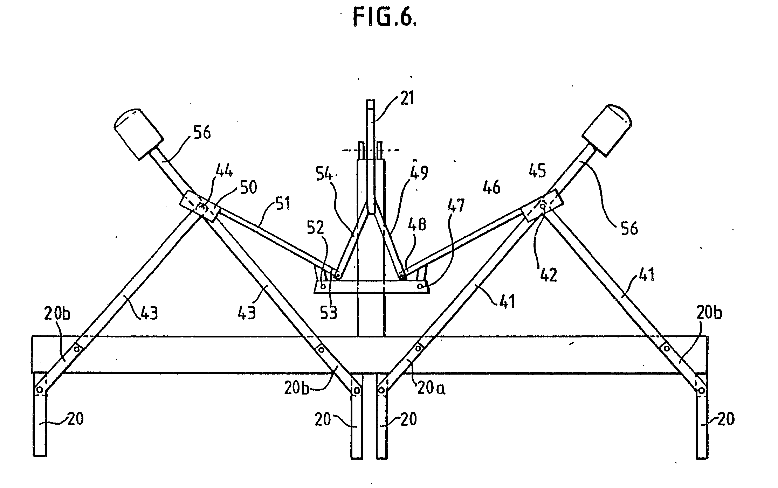

Turning now to Figure 6, there is shown part of the rear end of a device which is similar to that of Figures 1 to 5 except that the cable 55 is omitted and counterweight arms 56 are provided as extensions on the upper link 43 and the inner link 41.

The device operates in an identical manner to the device shown in Figures 1 to 5 except that once a pattern of bales has been dropped and the flaps are in the downward position shown in Figure 6 with the links 41 and 43 jack-knifed upwardly, the fact that the weight of the bales is no longer acting on the flaps enables the counterweights to pivot the links 41 and 43 such as to return the pivot pins 42 and 44 to their lower over-centre positions, at the same time returning all the other components, including the flaps 20, L-shaped lever 21 and arm 22, to their original positions ready to receive a new set of bales.

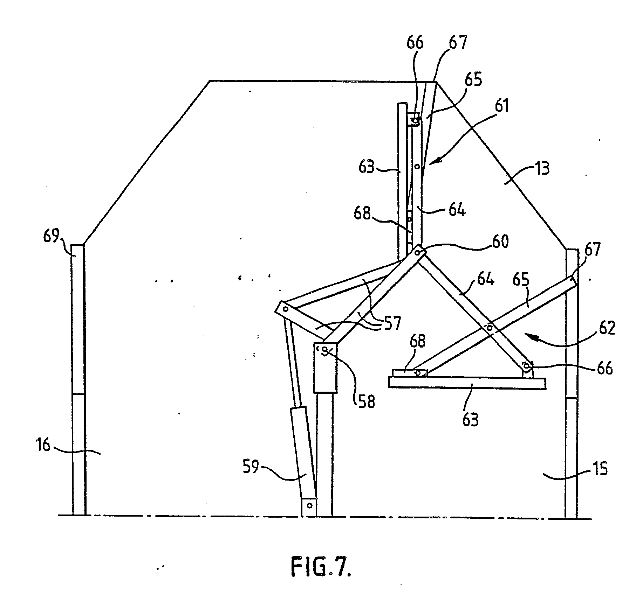

Figure 7 shows an embodiment of bale accumulating device according to the invention having an alternative mechanism for feeding the bales into the compartments 15 and 16. Mounted at the front end of the device there is a rigid triangular frame made up in plan of three members 57. The frame is pivotally mounted at 58 and the pivotal movement is controlled by a ram 59 similar to the ram 39.

Pivotally connected to the triangular frame at 60 are two guide devices 61 and 62. Each guide device comprises a guide member 63 connected to an X-shaped linkage made up of arms 64 and 65. Each arm 64 extends from pivot 60 to a fixed pivot 66 on one of the guide members 63. Each arm 65 has a free end 67 and the other end is connected to the associated guide member 63 by means of a sliding pivot 68. Thus each guide device can move between a collapsed condition (guide device 61 being shown in this condition in Figure 7) and an extended position (guide device 62 being shown in this position in Figure 1). Each guide device is spring loaded into the collapsed condition.

In Figure 7 the guide device 61 is ready to receive a bale. The bale will move rearwardly until it reaches the frame 57 and a switch will then cause the ram 59 to retract and pivot the triangular frame in an anti-clockwise direction as viewed in Figure 7. The degree of travel which is possible for the triangular frame is such that the bale will not quite be turned through a full 90°. However the additional turning movement required to complete rotation of the bale through 90° is provided by the end 67 of the arm 65 of the device 61 engaging with the side of the bale accumulating device at 69. This causes the arm 65 to pivot with respect to the arm 64, causing the guide device to move into its extended position, and the pivotal movement of the guide member 63 which is brought about by the extension of the device completes the turning movement of the bale. At the end of this cycle the guide device 61 will be in a position which is the mirror image of the position taken up by the guide device 62 as shown in Figure 7. As shown in Figure 7, the guide device 62 has just completed the turning of a bale, and the device 61 is ready to receive the next bale. When the above described cycle has been completed, and the guide device 61 is in the extended position at the end of the cycle, the guide device 62 will have been returned to its collapsed condition by the spring loading, and it will be lying in the mirror image position of the device 61 shown in Figure 7, ready to receive yet another bale.

**Claims**

1. A bale accumulating device comprising a wheeled vehicle (10, 11, 12) arranged for towing behind a baling machine to accumulate bales as the bales are fed out of the rear of the baling machine, arrange the bales according to a predetermined pattern and release the bales when a predetermined number of bales have accumulated in the predetermined pattern, the vehicle having two compartments (15, 16) arranged side by side and extending parallel to the fore and aft axis of the vehicle, and sorting means (28) operable to receive the bales and turn them through 90° and feed them to the compartment (15, 16), characterised in that there are support means (20) at the bottom of each compartment (15, 16) arranged to support within the respective compartment (15, 16) a row of bales arranged adjacent to one another with the row extending parallel to the fore and aft axis of the vehicle and the longitudinal axis of each bale extending perpendicular to the fore and aft axis of the vehicle, the sorting means (28) comprising a frame positioned between the two compartments (15, 16) and which, when a bale has issued from the baling machine, engages with the bale and swings to one side such that the bale moves through an arc of 90° and is urged into one of the compartments (15, 16), the frame then being in a position such that after the next bale has issued from the baling machine, swinging back of the frame in the opposite direction will turn the next bale and urge it into the other of the compartments.

2. A bale accumulating device as claimed in claim 1, the device being such that when each compartment (15, 16) has accumulated a predetermined number of bales, the support means (20) at the base of each compartment allows the accumulated bales to drop through the bottom of the compartment on to the ground.

3. A bale accumulating device as claimed in claim 1 or claim 2, in which movement of the frame (20) is controlled by a switch device operated by engagement of a bale with the frame (20).

4. A bale accumulating device as claimed in any one of the preceding claims, in which the frame (20) is provided with guide members (31, 33) to assist in positioning the bales correctly and the guide members may be movable relative to the frame as the frame swings.

5. A bale accumulating device as claimed in claim 4, in which the movement of the guide members is controlled by the swinging movement of the frame.

6. A bale accumulating device as claimed in claim 5, in which the movement of the guide members is controlled by cam means (36, 37, 38).

7. A bale accumulating device as claimed in any one of the preceding claims, in which, after a first bale has been urged into a compartment, the bale is successively moved along the compartment from the front end to the rear end by the pressure exerted by succeeding bales as they are urged into the same compartment.

8. A bale accumulating device as claimed in any one of the preceding claims, in which the support means of each compartment comprises a pair of support flaps (20) positioned one at each side of the associated compartment such that the two ends of each bale are supported one on each support flap.

9. A bale accumulating device as claimed in claim 8, in which each flap (20) is hinged to the side of the associated compartment so that the support flaps can release the bales by swinging downwardly from a horizontal position to a vertical position.

10. A bale accumulating device as claimed in claim 9, in which the movement of the flaps into the vertical position is controlled by a control device (24) arranged at the rear of the compartments, which control device is operated by a bale when each compartment is full.

11. A bale accumulating device as claimed in claim 10, in which the control device (24) comprises a control flap which is arranged at the end of the compartment which will receive the last bale of a predetermined accumulated pattern of bales.

12. A bale accumulating device as claimed in claim 11, in which the control flap (24) is connected by a linkage (21, 46, 49) to a release mechanism (41, 43) for the support flaps (20).

**Revendications**

1. Dispositif d'amoncellement de balles comprenant un véhicule à roues (10, 11, 12) conçu pour être attelé derrière une machine à emballer afin d'amonceler les balles au fur et à mesure qu'elles sortent de l'arrière de la machine à emballer, de disposer les balles selon un arrangement prédéterminé et de libérer ces balles quand un nombre prédéterminé d'entre elles ont été amoncelées selon l'arrangement prédéterminé, le véhicule comportant deux compartiments (15, 16) disposés côte à côte et s'étendant parallèlement à l'axe longitudinal du véhicule, et des moyens de triage (28) pouvant être mis en action pour recevoir les balles et pour les faire tourner de 90° avant de les transférer dans le compartiment (15, 16), caractérisé en ce que des moyens de support (20) sont prévus au fond de chaque compartiment (15, 16) pour supporter dans le compartiment respectif (15, 16) une rangée de balles disposées l'une près de l'autre de manière que la rangée s'étende parallèlement à l'axe longitudinal du véhicule et que l'axe longitudinal de chaque balle soit perpendiculaire à l'axe longitudinal du véhicule, les moyens de triage (28) comprenant un cadre placé entre les deux compartiments (15, 16) et qui, quand une balle sort de la machine à emballer, vient en contact avec la balle et la fait pivoter d'un côté de telle façon que cette balle se déplace sur un arc de 90° et soit poussée à l'intérieur de l'un des compartiments (15, 16), le cadre étant ensuite dans une position telle qu'après que la balle suivante est sortie de la machine à emballer, le pivotement en retour dudit cadre dans la direction opposée, fait tourner la balle suivante et la pousse à l'intérieur de l'autre compartiment.

2. Dispositif d'amoncellement de balles selon la revendication 1, ce dispositif étant conçu de telle sorte que, quand un nombre prédéterminé de balles ont été rassemblées dans chacun des compartiments (15, 16), les moyens de support (20) situés au fond de chaque compartiment, permettent aux balles amoncelées de tomber sur le sol à travers le fond du compartiment.

3. Dispositif d'amoncellement de balles selon la revendication 1 ou 2, dans lequel le mouvement du cadre (20) est commandé par un dispositif de commutation qui est actionné par le contact d'une balle avec le cadre (20).

4. Dispositif d'amoncellement de balles selon l'une quelconque des revendications précédentes, dans lequel le cadre (20) est pourvu d'éléments de guidage (31, 33) destinés à contribuer au positionnement correct des balles, ces éléments de guidage pouvant être déplacés par rapport au cadre quand celui-ci pivote.

5. Dispositif d'amoncellement de balles selon la revendication 4, dans lequel le déplacement des éléments de guidage est commandé par le mouvement de pivotement du cadre.

6. Dispositif d'amoncellement de balles selon la revendication 5, dans lequel le mouvement des éléments de guidage est commandé par des moyens formant cames (36, 37, 38).

7. Dispositif d'amoncellement de balles selon l'une quelconque des revendications précédentes, dans lequel, après qu'une première balle a été poussée dans un compartiment, cette balle est successivement déplacée par paliers successifs le long de ce compartiment, de l'extrémité antérieure à l'extrémité postérieure de ce dernier, par la pression exercée par les balles suivantes au fur et à mesure que celles-ci sont poussées dans le même compartiment.

8. Dispositif d'amoncellement de balles selon l'une quelconque des revendications précédentes, dans lequel les moyens de support de chaque compartiment comprennent deux tablettes (20) disposées de part et d'autre du compartiment respectif de sorte que les deux extrémités de chaque balle sont respectivement supportées par les deux tablettes.

9. Dispositif d'amoncellement de balles selon la revendication 8, dans lequel chaque tablette (20) est articulée au côté du compartiment respectif, de sorte que les tablettes de support peuvent libérer les balles par un mouvement de pivotement vers le bas les amenant d'une position horizontale à une position verticale.

10. Dispositif d'moncellement de balles selon la revendication 9, dans lequel le mouvement des tablettes les amenant dans leur position verticale est commandé par un dispositif de commande (24) installé à l'arrière des compartiments, lequel dispositif de commande est actionné par une balle quand le compartiment considéré est plein.

11. Dispositif d'amoncellement de balles selon la revendication 10, dans lequel le dispositif de commande (24) comprend un volet de commande disposé à l'extrémité du compartment qui est appelée à recevoir la dernière des balles d'un groupe de balles amoncelées selon un arrangement prédéterminé.

12. Dispositif d'amoncellement de balles selon la revendication 11, dans lequel le volet de commande (24) est relié par une liaison articulée (21, 46, 49) à un mécanisme (41, 43) libérant les tablettes de support (20).

## Patentansprüche

1. Ballensammelvorrichtung mit einem Radfahrzeug (10, 11, 12), gestaltet und angeordnet zum Nachgezogenwerden hinter einer Ballenmaschine, um Ballen zu sammeln, die hinten aus der Ballenmaschine herauskommen und um die Ballen gemäß einem vorgegebenen Muster anzuordnen und dann abzugeben, wenn eine vorbestimmte Anzahl von Ballen im vorbestimmten Muster angesammelt wurden, wobei das Fahrzeug wenigstens zwei Abteile (15, 16) aufweist, die nebeneinander angeordnet sind und die sich parallel zur Vorder- und Hinterachse des Fahrzeuges erstrecken, ferner mit einer Sortiereinrichtung (28) zum Aufnehmen der Ballen, Wenden um 90 Grad und Zuführen zum Abteil (15, 16), dadurch gekennzeichnet, daß am Boden eines jeden Abteils (15, 16) Trageinrichtungen vorgesehen sind, die innerhalb des jeweiligen Abteils (15, 16) eine Reihe von zueinander benachbarten Ballen tragen, wobei sich die Längsachse eines jeden Ballens senkrecht zur Vorder- und Hinterachse des Fahrzeuges erstreckt, daß die Sortiereinrichtung (28) einen Rahmen aufweist, der zwischen den beiden Abteilen (15, 16) angeordnet ist und der nach dem Abgeben eines Ballens von der Ballenmaschine den Ballen erfaßt und zu einer Seite ausschwingt, so daß der Ballen einen Bogen von 90 Grad durchlauft und in eines der Abteile (15, 16) geschoben wird, wonach sich der Rahmen in einer solchen Position befindet, daß nach dem Abgeben des nächsten Ballens aus der Ballenmaschine ein Zurückschwingen des Rahmens in die Gegenrichtung den nächsten Ballen wendet und ihn in das andere der Abteile drückt.

2. Ballensammelvorrichtung nach Anspruch 1, dadurch gekennzeichnet, daß die Trageinrichtung am Boden eines jeden Abteiles nach dem Ansammeln einer vorbestimmten Anzahl von Ballen in jedem Abteil (15, 16) die angesammelten Ballen durch den Boden des Abteiles auf den Erdboden fallen läßt.

3. Ballensammelvorrichtung nach Anspruch 1, 2, dadurch gekennzeichnet, daß die Bewegung des Rahmens (20) von einer Schalteinrichtung gesteuert wird, die durch Angreifen des Rahmens (20) an einem Ballen betätigt wird.

4. Ballensammelvorrichtung nach einem der vorausgegangenen Ansprüche, dadurch gekennzeichnet, daß der Rahmen (20) mit Führungseinrichtungen (31, 33) ausgerüstet ist, die das saubere Positionieren der Ballen unterstützen und die beim Ausschwingen des Rahmens relativ zum Rahmen beweglich sein können.

5. Ballensammelvorrichtung nach Anspruch 4, dadurch gekennzeichnet, daß die Bewegung der Führungselemente durch die Schwingbewegung des Rahmens gesteuert wird.

6. Ballensammelvorrichtung nach Anspruch 5, dadurch gekennzeichnet, daß die Bewegung der Führungselemente durch Nockenelemente (36, 37, 38) gesteuert wird.

7. Ballensammelvorrichtung nach einem der vorausgegangenen Ansprüche, dadurch gekennzeichnet, daß der Ballen nach dem Einschieben eines ersten Ballens in ein Abteil aufeinanderfolgend vom vorderen zum hinteren Ende des Abteiles geschoben wird, und zwar durch den Druck, den die nachfolgenden Ballen dann ausüben, wenn sie in dasselbe Abteil eingeschoben werden.

8. Ballensammelvorrichtung nach einem der vorausgegangenen Ansprüche, dadurch gekennzeichnet, daß die Trageinrichtung eines jeden Abteiles ein Paar Tragklappen (20) umfaßt, von denen jeweils einer auf jeder Seite des betreffenden Abteiles angeordnet ist, so daß jedes Ende eines jeden Ballens auf einer Tragklappe ruht.

9. Ballensammelvorrichtung nach Anspruch 8, dadurch gekennzeichnet, daß jede Klappe (20) an der Seite des betreffenden Abteiles angelenkt ist, so daß die Tragklappe die Ballen durch Nachunten-Schwingen von einer horizontalen Position in eine vertikale Position freigibt.

10. Ballensammelvorrichtung nach Anspruch 9, dadurch gekennzeichnet, daß die Bewegung der Klappen in die vertikale Position durch eine Steuereinrichtung (24) gesteuert wird, die sich im rückwärtigen Bereich der Abteile befindet und die dann von einem Ballen betätigt wird, wenn jedes Abteil voll ist.

11. Ballensammelvorrichtung nach Anspruch 10, dadurch gekennzeichnet, daß die Steuereinrichtung (24) eine Steuerklappe umfaßt, die sich am Ende des Abteiles befindet, das den letzten Ballen eines vorbestimmten angesammelten Musters von Ballen aufnimmt.

12. Ballensammelvorrichtung nach Anspruch 11, dadurch gekennzeichnet, daß die Steuerklappe (24) durch eine Hebelei (21, 46, 49) mit einem Auslösemechanismus (41, 43) für die Tragklappen (20) verbunden ist.

FIG.1.

FIG.2.

FIG.4.

FIG.5.

FIG.3.

0 030 808

FIG.6.

FIG.7.